# EUROPEAN PATENT SPECIFICATION

(11) **EP 2 395 808 B1**
(45) Date of publication and mention of the grant of the patent: **06.11.2013**
(21) Application number: 11005410.3
(22) Date of filing: 23.01.2006
(51) Int. Cl.: H04W 88/02, H04H 60/33

(54) **Transmitter controlled communication links**
Sendergesteuerte Nachrichtenverbindungen
Liens de communication contrôlés par transmetteur

(30) Priority: 21.01.2005 US 645021; 20.01.2006 US 336362; 20.01.2006 US 336361
(43) Date of publication of application: 14.12.2011
(62) Divisional of application: 06719152.8
(73) Proprietor: RESPONSIVE INNOVATIONS, LLC, Akro OH 44319 (US)
(72) Inventor: Adkins, Kevin, G., Akron Ohio 44319 (US)
(74) Representative: Kador & Partner

(56) References cited:
- EP-A- 1 427 228
- WO-A-2004/017662
- US-A1- 2003 153 321
- US-A1- 2003 215 780
- US-B1- 6 665 000

## Description

### FIELD OF INVENTION

The present application relates to an audience response system and method. More particularly, the present application relates to an audience response system having a plurality of transmitters and at least one receiver and a method for using the same.

### BACKGROUND

Audience response systems are employed to retrieve (or receive) responses from a group of individuals at a central location. Such systems may be used in classroom settings, corporate meetings, or in other gatherings of individuals. Wireless audience response systems may include at least one base unit and a plurality of handheld units. Each handheld unit typically includes a keypad for inputting user responses.

In one known embodiment, the base unit controls communication by, for example, polling each handheld unit. If a user has entered a response into the keypad, the response is transmitted to the base unit when the handheld unit is polled. After receipt of the response, the base unit may send an acknowledgment signal.

US 2003/0215780 A1 relates to a audience response system comprising a central communication unit and plurality of remote response units. The central communication unit initiates communication by transmitting a voting command signal.

A participant response system and method comprising a base station and a plurality of handsets for allowing a participant of an event to input a response is disclosed in WO 2004/017662 A2. The base station initiates communication with the handsets.

### BRIEF DESCRIPTION OF DRAWINGS

The accompanying drawings, which are incorporated in and constitute a part of the specification, illustrate various example systems, methods, and so on that illustrate various example embodiments of aspects of the invention. It will be appreciated that the illustrated element boundaries (e.g., boxes, groups of boxes, or other shapes in the figures represent one example of the boundaries. One of ordinary skill in the art will appreciate that one element may be designed as multiple elements or that multiple elements may be designed as one element. An element shown as an internal component of another element may be implemented as an external component and vice versa. The drawings may not be to scale and the proportion of certain elements may be exaggerated for the purpose of illustration.

**Figure 1** is a simplified front plan view of one embodiment of a handheld device for a wireless response system;

**Figure 2** is a simplified front plan view of one embodiment of a receiver for an audience response system;

**Figure 3** is a simplified schematic drawing of one embodiment of an audience response system including a handheld device in communication with a receiver;

**Figure 4** is a simplified schematic drawing of one embodiment of an audience response system including a receiver in communication with a plurality of handheld device;

**Figure 5** is a simplified flow chart of one embodiment of a method for using a handheld device in an audience response system;

**Figure 6** is a simplified flow chart of one embodiment of a method for using a receiver in an audience response system;

**Figure 7** is a simplified schematic drawing of RF profiles for a handheld device and a receiver in one embodiment of an audience response system; and

**Figure 8** is a simplified illustration of one embodiment of an RF signal spread on a selected frequency band.

### DETAILED DESCRIPTION

This application describes an audience response system and method of use. The system may include at least one handheld device and a base unit. The system may employ a single handheld device or several thousand handheld devices. The handheld device may be capable of transmitting and receiving information. The handheld device may also be referred to as a transmitter device or a handheld user transceiver.

Similarly, although the base unit is referred to as a "receiver," it may be capable of both transmitting and receiving information. The base unit may be referred to as a receiver or a central transceiver.

"Address", as used herein, includes but is not limited to one or more network accessible addresses, device identifiers, electronic identification numbers (such as EINs), IP addresses, url and ftp locations, e-mail addresses, names, a distribution list including one or more addresses, network drive locations, account numbers or other types of addresses that can identify a desired destination or device.

"Computer-readable medium", as used herein, refers to any medium that participates directly or indirectly in providing signals, instructions and/or data to one or more processors for execution. Such a medium may take many forms, including but not limited to, non-volatile media, volatile media, and transmission media. Non-volatile media may include, for example, optical disks, magnetic disks or so-called "memory sticks." Volatile media may include dynamic memory. Transmission media may include coaxial cables, copper wire, and fiber optic cables. Transmission media can also take the form of acoustic or light waves, such as those generated during radio-wave and infra-red data communications, or take the form of one or more groups of signals. Common forms of computer-readable media include, for example, a floppy disk, a flexible disk, hard disk, magnetic tape, or any other magnetic medium, a CD-ROM, any other optical medium, punch cards, papertape, any other physical medium with patterns of holes, a RAM, a PROM, an EPROM, a FLASH-EPROM, any other memory chip or cartridge, a carrier wave/pulse, or any other medium from which a computer, a processor or other electronic device can read.

"Logic", as used herein, includes but is not limited to hardware, firmware, software and/or combinations of each to perform a function(s) or an action(s), and/or to cause a function or action from another component. For example, based on a desired application or need, logic may include a software controlled microprocessor, discrete logic such as an application specific integrated circuit (ASIC), a programmed logic device, memory device containing instructions, or the like. Logic may also be fully embodied as software.

"Signal", as used herein, includes but is not limited to one or more electrical or optical signals, analog or digital signals, one or more computer or processor instructions, messages, a bit or bit stream, or other means that can be received, transmitted, and/or detected.

"Software", as used herein, includes but is not limited to one or more computer readable and/or executable instructions that cause a computer or other electronic device to perform functions, actions, and/or behave in a desired manner. The instructions may be embodied in various forms such as routines, algorithms, modules or programs including separate applications or code from dynamically linked libraries. Software may also be implemented in various forms such as a stand-alone program, a function call, a servlet, an applet, instructions stored in a memory, part of an operating system or other type of executable instructions. It will be appreciated by one of ordinary skill in the art that the form of software is dependent on, for example, requirements of a desired application, the environment it runs on, and/or the desires of a designer/programmer or the like.

"User", as used herein, includes but is not limited to one or more persons, software, computers or other devices, or combinations of these.

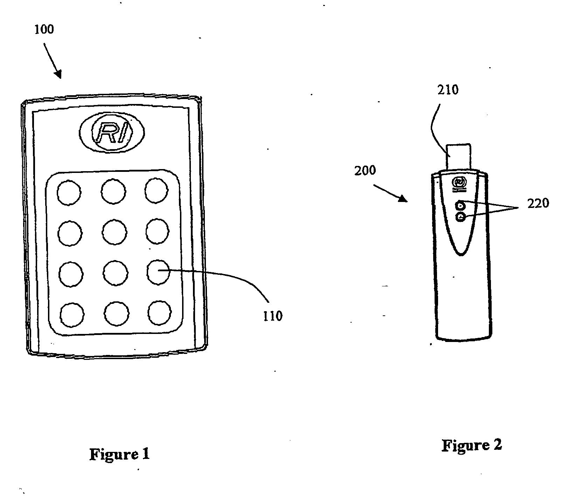

**Figure 1** illustrates a front plan view of one embodiment of a handheld device 100 for an audience response system. In the illustrated embodiment, the handheld device **100** may include a plurality of buttons **110** configured to accept a user input. In alternative embodiments, the handheld device may employ switches, dials, an LCD touch screen, a graphical user interface, or any other known interface configured to accept a user input.

In one embodiment, the handheld device **100** has a length of less than 5 inches, a width of less than 4 inches, and a height of less than 0.75 inches. In an alternative embodiment, the handheld device has a length of 3.3 inches, a width of 2.1 inches, and height of 0.3 inches. In other alternative embodiments, the handheld device may be larger or smaller.

In one embodiment, the handheld device **100** is battery operated. The battery may be a removable battery, such as a AA or AAA size battery or a watch battery. In one embodiment, the handheld device **100** receives operative power from two (2) 3.0V batteries (not shown). Exemplary batteries include, without limitation, CR2032 coin cell lithium batteries, CR2320 coin cell lithium batteries, or CR 1025 coin cell lithium batteries. In one embodiment, the batteries have a diameter of less than 1.25 inches and a height of less than 0.25 inches. In another embodiment, the batteries have a diameter of approximately 0.8 inches and a height of approximately 0.125 inches. When such batteries are used with one of the above described embodiments of the handheld device **100,** the handheld device **100** has a length that is less than 5 times the diameter of one battery, a width that is less than 3 times the diameter of one battery, and a height that is less than 3 times the height of one battery. In one embodiment, two batteries may be stacked, one on top of the other. In another embodiment, the batteries may be placed side by side.

**Figure 2** illustrates a front plan view of one embodiment of a receiver **200** for an audience response system. In the illustrated embodiment, the receiver **200** may include a connector **210** configured to be connected to a USB port of a computer. In alternative embodiments, the receiver may include a connector configured to be connected to a firewire or iLink port, a serial port, or any other known type of computer port. In another alternative embodiment, the receiver may wirelessly communicate with a computer via an infrared or RF transmitter. In yet another alternative embodiment, the receiver does not directly connect to a computer.

With continued reference to **Figure 2****,** the receiver **200** may include at least one LED **220.** The LED **220** may be configured to indicate on/off status and transmission status. In alternative embodiments, the receiver may employ a dial, an LCD screen, or other known indicators. In another alternative embodiment, the receiver does not include any indicators.

In one embodiment, the receiver **200** has a length of less than 6 inches, a width of less than 2.5 inches, and a height of less than 1 inch. In an alternative embodiment, the receiver 200 has a length of 3.7 inches, a width of 1.1 inches, and a height of 0.4 inches. In other alternative embodiments, the receiver may be larger or smaller.

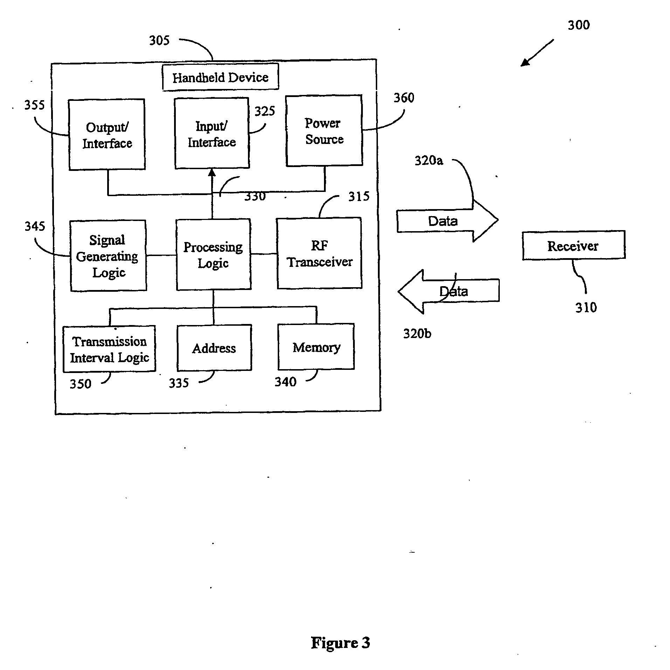

**Figure 3** illustrates one embodiment of an audience response system **300.** In the illustrated embodiment, the system **300** includes at least one handheld device **305** and at least one receiver **310.** The handheld device **305** includes a wireless data transmitter illustrated as a radio frequency (RF) transceiver **315** configured to transmit RF signals as shown at **320a** and receive RF signals as shown at **320b.** In one embodiment, the RF transceiver **315** may be configured as model RRRF-01, commercially available from Responsive Innovations, LLC. In an alternative embodiment (not shown), the handheld device may include an RF transmitter, but not a receiver or a transceiver. In another alternative embodiment (not shown), the handheld device may include an infrared (IR) source configured to transmit data and/or an IR sensor configured to receive data.

In one-embodiment, the transceiver **315** transmits RF signals and receives RF signals on the same frequency or channel, or on the same band of frequencies or channels. In another embodiment, the transceiver **315** transmits RF signals at a first frequency (or first band of frequencies) and receives RF signals at a second frequency (or second band of frequencies).

As shown in **Figure 3****,** the handheld device **305** includes an input interface **325.** Exemplary input interfaces include a keypad, an LCD touchpad, dials, toggle switches, levers, knobs, buttons, or any other appropriate control or input mechanisms.

In one embodiment, the transceiver **315** may transmit and receive RF transmissions on one of a plurality of different frequencies. The user may select the frequency through the input interface **325.** In this manner, the user may select a frequency that has little or no local RF activity to avoid interference. In one embodiment, the user may select a frequency from 82 different frequencies. In an alternative embodiment, the user may select from more or fewer frequencies.

The input interface **325** is in communication with processing logic **330.** When a user inputs a selection into the input interface **325,** the user selection may be communicated to the processing logic **330.** The processing logic 330 may then generate and format a signal for transmission. In one embodiment, the signal may include a stored address **335,** and the user selection. The address **335** may be a number, a sequence of alphanumeric characters, a sequence of ASCII characters, and the like. In one embodiment, the address **335** is permanently assigned to a handheld device **305** and stored in a computer-readable medium, such as a memory **340.**

In an alternative embodiment (not shown), an address may be generated upon the occurrence of a predetermined event. For example, the processing logic **330** or other logic may randomly generate an address **335** each time a user inputs a selection or after a predetermined number of selections. In another embodiment, the receiver **310** may assign an address to each handheld device **305,** or the user may enter an identifier.

With continued reference to **Figure 3****,** the processing logic **330** is shown to be in communication with signal generating logic **345.** After the processing logic retrieves the address **335,** the processing logic **330** sends the user selection and the address **335** to the signal generating logic **345.** The signal generating logic **345** may generate an RF signal that encodes the user selection and the address. In an alternative embodiment (not shown), the processing logic **330** may perform the step of generating an RF signal.

The processing logic **330** may also be in communication with the RF transceiver **315.** After the RF signal is generated, the processing logic **330** instructs the RF transceiver **315** to transmit the RF signal as shown at **320a.** The RF signal may also be referred to as a wireless selection signal. In one embodiment, the RF signal is transmitted until an acknowledgment signal is received or for a predetermined amount of time.

As illustrated in **Figure 3****,** the processing logic **330** may be in communication with a transmission interval logic **350.** The transmission interval logic **350** generates a transmission interval. The transmission interval is an amount of time or clock cycles that elapse between transmission attempts of the RF signal. In one embodiment, the transmission interval is generated on the order of microseconds. In alternative embodiments, the transmission interval is generated on the order of seconds, milliseconds, nanoseconds, picoseconds, femtoseconds, attoseconds, or any other known measurement of time. The transmission interval can be optimized by a number of factors, such as: the number of handheld devices, the number of receivers, the number of users, the frequency of which questions are asked by a moderator, the frequency of the RF signal, the amount of data being transmitted, and the type of data being transmitted.

In one embodiment, the transmission interval logic 350 generates a transmission interval by generating a random number. In another embodiment, the transmission interval is calculated according to a mathematical function. For example, the transmission interval may be calculated by multiplying the address 335 by programmed constant or by a random number. In another embodiment (not shown), the transmission interval may be generated by the processing logic 330. In yet another alternative embodiment (not shown), a unique transmission interval may be a fixed, predetermined number and stored in memory **340.**

In another alternative embodiment, the time interval may vary with each retransmission of a selection. For example, the time interval may become progressively longer after each retransmission. In one embodiment, the transmission interval may be calculated according to the formula tₙ = r + n(ε), where tₙ is the time interval for the n^{th} iteration, r is a random number that is either predetermined or generated with each user selection, n is the number of current iterations, and ε is a small number relative to r. In this embodiment, for example, the transmission interval after the first transmission may be 5ms, the transmission interval after the first retransmission may be 5ms + 100µs, the transmission interval after the second retransmission may be 5ms + 200ps, etc.

The handheld device **305** transmits the RF signal at a user selected frequency or at a default frequency, according to the transmission interval. In other words, the RF transceiver **315** transmits the RF signal, then pauses for a length of time equal to the transmission interval, then repeats the transmission. This process may be repeated for a predetermined number of transmissions, a predetermined length of time, or until an acknowledgment signal is received. In one embodiment, the process repeats until the first occurrence of: (a) the receipt of an acknowledgment signal or (b) eight (8) seconds elapse after the first RF transmission. In an alternative embodiment, the predetermined length of time may be five (5) seconds. In another alternative embodiment, there is no predetermined length of time for terminating the transmission. In yet another alternative embodiment, the predetermined length of time may be programmable by a user.

The transmission interval may serve several functions. For example, using a transmission interval may conserve power, because sending a transmission intermittently may use less power than sending a continuous transmission. Further, when a single receiver **310** is receiving RF signals from a plurality of handheld devices **305,** the use of different transmission intervals staggers the RF signals, such that they will arrive at the receiver **310** at different times. Additionally, some known transceivers may not be capable of simultaneous or near simultaneous receiving and transmitting of an RF signal. If such a transceiver is employed, the transmission interval allows the RF transceiver **315** to receive an acknowledgement signal at a time when it is not transmitting an RF signal.

With continued reference to **Figure 3****,** the handheld device also includes an output interface **355.** In one embodiment, the output interface **355** indicates operating status to a user such as: that a signal is being transmitted, that an acknowledgment has been received, that user entry has been confirmed, and the like. In such an embodiment, one or more LEDs, an LCD, or other display may serve as an output interface **355.**

In one exemplary embodiment (not shown), the handheld device **305** employs a three color LED arrangement selected for the low power requirements of LED technology. In this embodiment, the LED flashes a first color (such as amber) to indicate that the handheld device **305** is transmitting an RF signal. The LED emits a solid (i.e., non-flashing) second color (such as green) to indicate that an acknowledgement signal has been received and the data has been accepted by the receiver **310.** The LED emits a solid third color (such as red) to indicate that no acknowledgement signal has been received and the transmission has been terminated unsuccessfully. In an alternative embodiment, the handheld device **305** may employ a fourth LED display to indicate that an acknowledgment signal is received, but the user selection was not accepted by the receiver **310.**

In another embodiment, the output interface **355** may include an LCD. A first display message indicates that the handheld device **305** is transmitting a signal, a second display message indicates that an acknowledgment has been received, and a third display message indicates that no acknowledgment has been received and the transmission has been terminated. Additionally, the LCD screen may display the user selection along with the transmission status.

In one embodiment, the handheld device **305** includes a power source **360,** such as a battery. The power source **360** may be a removable battery, such as a AA or AAA size battery or a watch battery, which can be replaced when the power runs low. In one embodiment, the power source **360** includes two (2) 3.0V batteries. Exemplary batteries include, without limitation, CR2032 coin cell lithium batteries, CR2320 coin cell lithium batteries, or CR 1025 coin cell lithium batteries.

In one embodiment, the handheld device **305** can transmit an RF signal when supplied with a current of 10.5mA and can receive an RF signal when supplied with a current of 19mA. In other embodiments, the handheld device can transmit an RF signal when supplied with a current of less than 15mA and can receive an RF signal when supplied with a current of less than 25mA.

Alternatively, the power source **360** may be more permanently fixed within the handheld device **305** and the handheld device **305** may be plugged into an external power source to recharge the power source **360.** In another embodiment (not shown), the handheld device may alternatively be configured to be plugged into an external power source or employ photovoltaic panels.

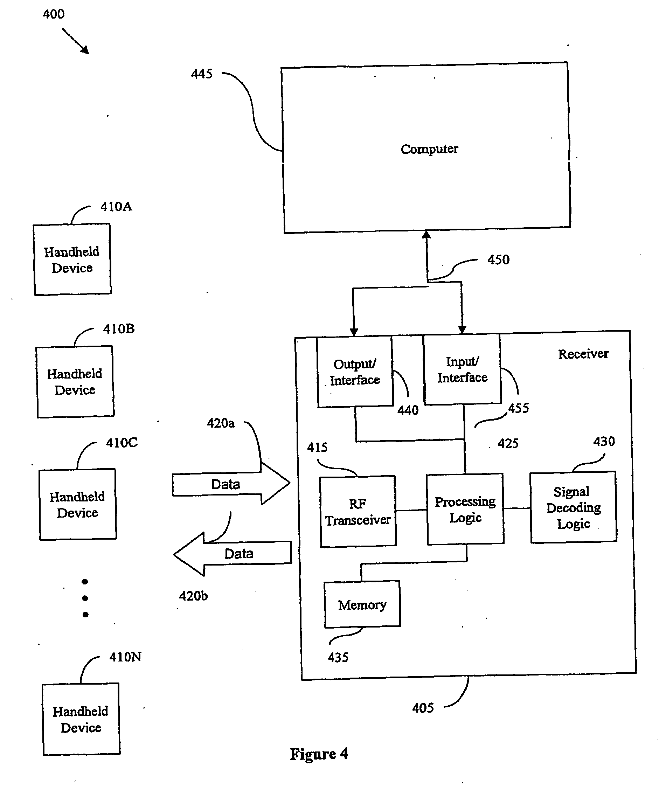

**Figure 4** illustrates a simplified schematic drawing of one embodiment of an audience response system **400,** having a receiver **405** in communication with a plurality of handheld devices **410A-N.** The handheld devices **410A-N** may be substantially similar to the handheld device **305** illustrated in **Figure 3****.** It should be understood that the receiver **405** may be in data communication with a single handheld device or many handheld devices.

As shown in **Figure 4****,** the receiver **405** includes an RF transceiver **415** configured to receive an RF signal as shown at **420a** and send an RF signal as shown at **420b.** In an alternative embodiment (not shown), the receiver may include an RF receiver, but not a transmitter or a transceiver. In another alternative embodiment (not shown), the receiver may include an infrared (IR) sensor configured to receive data and/or an IR source configured to transmit data.

The receiver **405** further includes processing logic **425** in data communication with signal decoding logic **430.** In this embodiment, when a signal is received by the RF transceiver, it is communicated to the processing logic **425.** The processing logic may instruct the signal decoding logic **430** to decode and parse the signal. The signal decoding logic **430** decodes the signal and parses the signal into components including a user selection and an address. In an alternative embodiment (not shown), the processing logic **425** may decode and parse the signal.

In one embodiment (not shown), the receiver may have an ID. The processing logic may be configured to only accept signals that contain the receiver ID, thus ensuring that any collected data is not skewed by spurious signals. In one embodiment, a replacement receiver may have the same ID as a first receiver. In such an embodiment, the replacement receiver would accept signals from the handheld devices, without the need for reprogramming the handheld devices. In another embodiment, all manufactured receivers may have the same ID.

After the signal has been successfully decoded and parsed, the processing logic **425** may generate an acknowledgment signal that contains, for example, the address and an acknowledgment indicator. The acknowledgment signal may also include an indication of whether the user selection was accepted. The processing logic **425** may also instruct the RF transceiver **415** to communicate the acknowledgment signal over communication link **420b.**

With continued reference to **Figure 4****,** the receiver **405** also includes a computer-readable medium such as a memory **435,** configured, for example, as RAM, EEPROM, or other types of writable memory. In one embodiment, the user selection and/or the address are stored in the memory **435** after the signal has been decoded and parsed by the signal decoding logic **430.** The storing of the user selection and/or the address may occur before, after, or concurrently with the transmission of the acknowledgment signal. In an alternative embodiment (not shown), the receiver does not have a writable memory and the user selection and unique identifier are instead only communicated to an external computer.

As further shown in **Figure 4****,** the receiver **405** includes an output interface **440.** In the illustrated embodiment the output interface **440** is an interface for a computer **445.** The computer **445** may be a PC, a laptop, a graphing calculator, or any other type of computer. The output interface **440** is in communication with the computer **445** via a hardwire connection **450.** The hardwire connection **450** may connect to a USB port, a serial port, a firewire or iLink port, or any other type of port. In an alternative embodiment (not shown), the output interface **440** is in communication with the computer **445** via a wireless connection.

In the illustrated embodiment, the receiver **405** further includes an input interface **455.** In an alternative embodiment (not shown), the receiver includes a single interface for both input and output. The receiver **405** may receive instructions from the computer **445** through the input interface **455,** such as instructions to wipe the memory **435.** In one embodiment, the input interface **455** receives power from the computer **445** through the connection **450.** In an alternative embodiment (not shown), the receiver **405** may include an internal power source, such as a battery or external power means.

In an alternative embodiment (not shown), the receiver is not connected to an external computer. Instead, the output interface **440** is a display, such as an LCD display. In such an embodiment, the user selection and/or the address may be displayed on the output interface **440.** In another alternative embodiment (not shown), the handheld device is not in communication with a computer during the communication of RF signals. Instead, data may be stored in the memory **435** and transferred to a computer **445** at a later time.

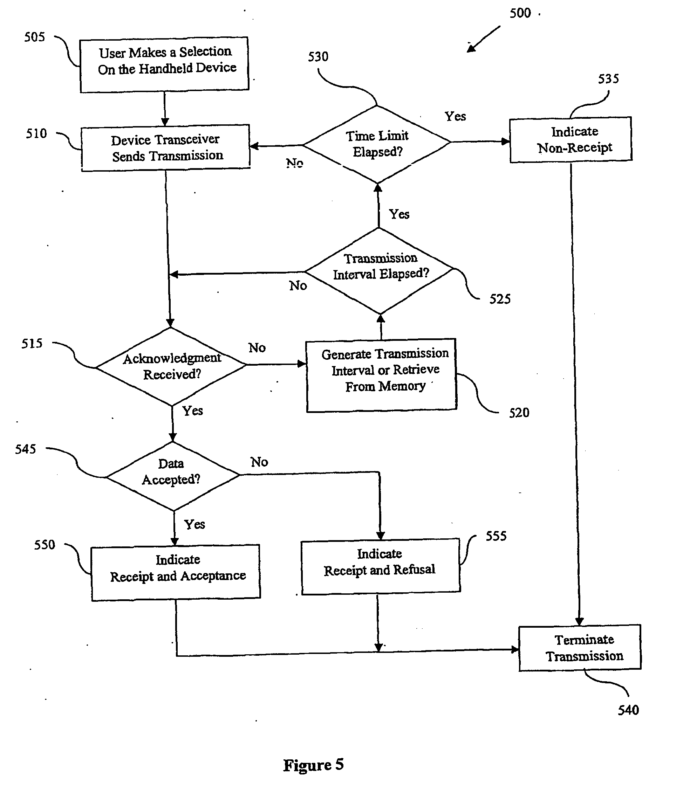

**Figure 5** illustrates a flow chart diagram for an exemplary method **500** for using a handheld device in an audience response system. The user makes a selection, step **505,** by selecting a button, turning a dial, etc. on the handheld device. After the user has made a selection, the handheld device communicates a signal that includes the user selection and an address, step **510.**

The handheld device then waits for an acknowledgment signal, step **515.** If an acknowledgment signal is not received, the handheld device generates or retrieves from memory a transmission interval, step **520,** for example, as described above in reference to **Figure 3****.** The handheld device then determines whether the transmission interval has elapsed, step **525.** If the transmission interval has not elapsed, the handheld device continues to wait for an acknowledgment signal, step **515.** If the transmission interval has elapsed, then the handheld device determines whether a predetermined transmission time limit has elapsed, step **530.** If the predetermined transmission time limit has elapsed, the handheld device indicates that no acknowledgment was received, step **535,** and the handheld device terminates transmission, step **540.** If the predetermined transmission time limit has not elapsed, the handheld device re-transmits the signal, step **510.** The handheld device then waits again for an acknowledgment signal, step **515.**

Once the handheld device receives an acknowledgment signal, step **515,** it determines whether the acknowledgment signal indicates that the data was accepted, step **545.** If the data was accepted, the handheld device indicates receipt and acceptance, step **550,** and terminates transmission, step **540.** If the data was not accepted, the handheld device indicates receipt and non-acceptance, step **555,** and terminates transmission.

In one embodiment, the handheld device transmits an RF signal and receives an acknowledgment RF signal at the same frequency, or on the same frequency band. In another embodiment (not shown), the handheld device transmits an RF signal at a first frequency (or first frequency band) and receives an acknowledgment RF signal at a second frequency (or second frequency band) different from the first frequency (or first frequency band). In such an embodiment, the handheld device may transmit and receive signals concurrently.

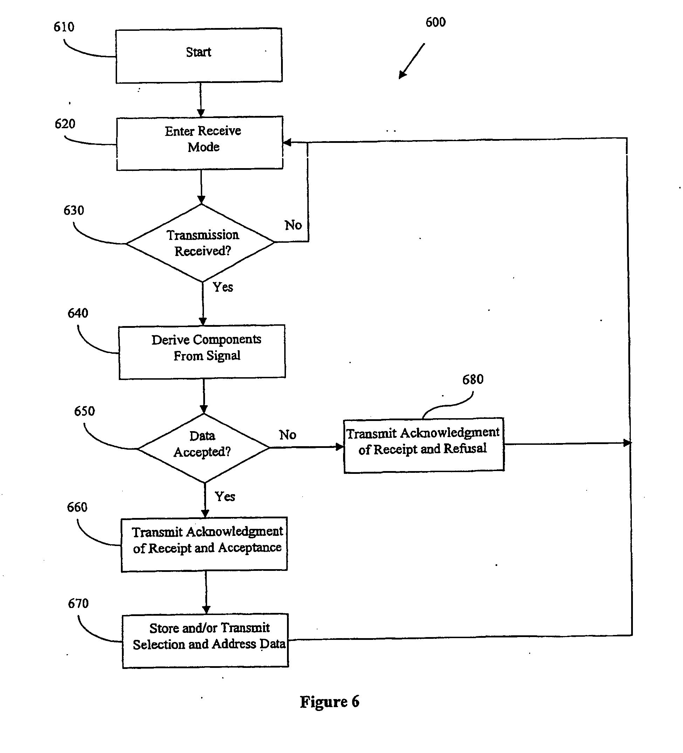

**Figure 6** illustrates a flow chart diagram for an exemplary method **600** for using a receiver in an audience response system. The receiver is first powered on, step **610,** and enters a receive mode, step **620.** In one embodiment, the receiver is powered on merely by plugging it into a USB port of a computer. While the receiver is in receive mode, it waits to receive a signal on a communication link, step **630.** If no signal is received, the receiver remains in receive mode, step **620.** Once a signal is received, the receiver may derive components from the signal such as user selected data or address data, step **640.**

After the data has been derived, the receiver determines whether some or all of the data can be accepted, step **650.** If the data is accepted, the receiver transmits an acknowledgment of receipt and acceptance, step **660,** and the data is stored in the receiver's memory and/or transmitted to an external processor, step **670.** The receiver then returns to receive mode, step **620.** In another embodiment (not shown), step 670 may be performed before or concurrently with step **660.** If the data is determined to be unacceptable, step **650,** the receiver may transmit an acknowledgment of receipt and non-acceptance of data, step **680.** The receiver then returns to receive mode, step **620.**

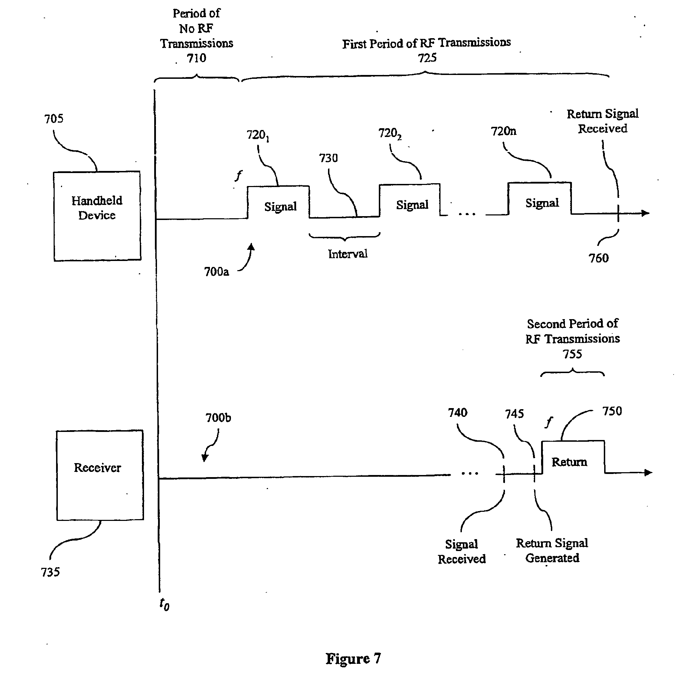

**Figure 7** illustrates a simplified schematic drawing of RF profiles **700a** of a handheld device **705** in one embodiment of an audience response system. In alternative embodiments, a plurality of handheld devices are employed. In the illustrated embodiment, the handheld device 705 makes no transmission until it receives a selection from a user. Thus, in RF profile **700a,** there is a distinct period of no RF transmission **710.** Upon a user entering a selection, the handheld device **705** transmits a first RF signal **720₁** at a frequency f, thus initiating a first period of RF transmissions **725.** The first RF signal **720₁** includes a user selection and an address, such as a unique address. In one embodiment, the first RF signal **720₁** lasts for a duration of 100µs. The duration is a function of the amount and type of data and the frequency ***ƒ***.

After the handheld device **705** transmits the first RF signal **720₁,** the RF profile **700a** includes no RF signals for a period equal to a transmission interval **730.** The transmission interval **730** may be generated or retrieved from memory, for example, as explained above in reference to **Figure 3****.** In one embodiment, the transmission interval lasts for a duration of 5ms. After the transmission interval **730,** the RF profile **700a** includes additional RF signals 720₂₋ₙ. Each RF signal 720₂₋ₙ is identical to the first RF signal 720₁, and is followed by a transmission interval **730.** Thus, in one embodiment, during the first period of RF transmissions **710,** there is a transmission frequency of one transmission every 5ms. In another embodiment, the transmission interval **730** is variable. For example, the transmission interval **730** may be 5ms after the first RF signal **720₁,** then 5ms + 100µs after the second RF signal **720₂,** ... and 5ms + ((n-1) * 100)us after the n^{th} RF signal **720ₙ.**

**Figure 7** further illustrates an RF profile 700b of a receiver **735** in one embodiment of an audience response system. During the first period of RF transmissions described above, the receiver **735** receives one of the RF signals 720₁₋ₙ transmitted by the handheld device **705,** as shown at **740.** The receiver **735** makes no transmission until it receives an RF signal.

Upon receipt of an RF signal at 740, the receiver 735 may identify user selection data and address data in the RF signal and determine whether to accept the user selection data. The receiver 735 then generates return data that includes the address data, as shown at 745. The receiver 735 communicates return data as at least one RF return signal **750** at the frequency f, thus initiating a second period of RF transmissions 755 that overlaps with the first period of RF transmissions **710.** In one embodiment, the return signal **750** lasts for a duration of 100µs.

The receiver **735** transmits a predetermined number of return signals **750** then terminates the second period of RF transmissions **755.** In the illustrated embodiment, the receiver **735** transmits a single return signal 750. In another embodiment (not shown), the receiver transmits multiple return signals, wherein each return signal is followed by a predetermined transmission interval or a randomly generated time interval.

Upon receipt of the return signal **750,** as shown at **760,** the handheld device **705** terminates the first period of RF transmissions **710.** Alternatively, if no return signal is received, the handheld device **705** may automatically terminate the first period of RF transmissions **710** after a predetermined time elapses. In one embodiment, the predetermined time limit is eight (8) seconds. In this embodiment, the first period of RF transmissions **710** has a duration of 100 microseconds to eight (8) seconds.

After the first and second periods of RF transmissions **725,755** are terminated, another distinct period of no RF transmissions follows. In an alternative embodiment (not shown), the handheld device **710** may transmit an RF signal at a first frequency and the receiver **740** may transmit an acknowledgment signal at a second frequency.

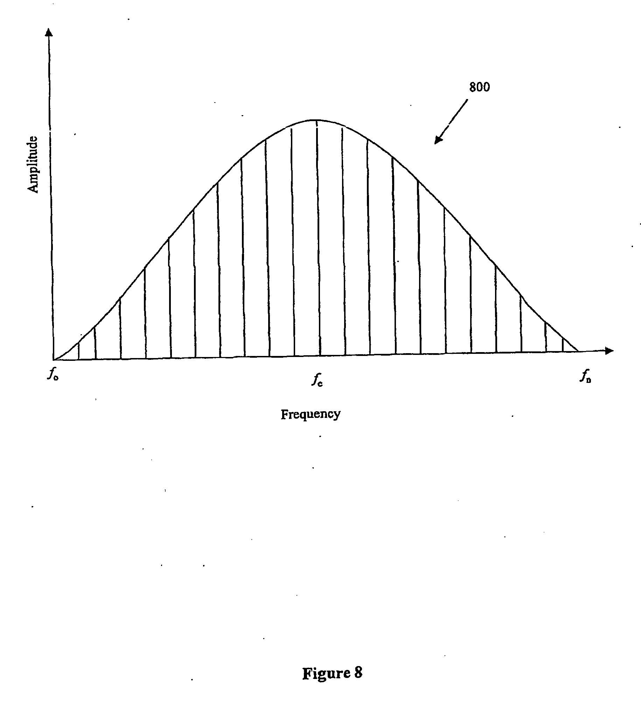

**Figure 8** illustrates one embodiment of an RF signal spread **800** on a selected frequency band. In this embodiment, the RF signal spread **800** covers a range of frequencies from ***ƒ***ₒ to ***ƒ***ₙ. When a handheld device or a receiver transmits on a selected frequency band, a signal is transmitted that may be centered on a frequency ***ƒ***_{c} while spread over ***ƒ***ₒ to ***ƒ***ₙ. The signal is strongest, and therefore has the highest amplitude, on frequency ***ƒ***_{c} at the center of the frequency band. The signal amplitude decreases at frequencies further from ***ƒ***_{c}, as shown in the illustrated embodiment. Both a handheld device and a receiver may transmit signals over this illustrated RF signal spread, or the handheld device and the receiver may transmit signals centered on different frequencies.

While the present application has been illustrated by the description of embodiments thereof, and while the embodiments have been described in some detail, it is not the intention of the applicants to restrict or in any way limit the scope of the appended claims to such detail. Additional advantages and modifications will readily appear to those skilled in the art. Therefore, the application, in its broader aspects, is not limited to the specific details, the representative apparatus, on the illustrative embodiments shown and described.

## Claims

1. An audience response system comprising:
a base unit (405),
a plurality of handheld devices (305) that are like in kind and perform a same function, each handheld device (305) including:
a handheld device transceiver (315),
an input selection control (325),
a unique address (335) associated with a single handheld device (305), and
handheld device logic (330) configured to receive a user selection from the input selection control (325) and instruct the handheld device transceiver (315) to repeatedly transmit a wireless selection signal (320a) encoding the unique address (335) and the user selection according to a defined profile radio frequency (700a) between each handheld device (305) and the base unit (405);
wherein the base unit (405) includes:
a base unit transceiver (415) configured to receive the wireless selection signal (320a), and
base unit logic (425) configured to decode the wireless selection signal (320a) into the unique address (335) and the user selection after receipt by the base unit device transceiver (415), generate a wireless acknowledgment signal (320b) including a representation of the unique address (335) and instruct the base unit transceiver (415) to transmit the wireless acknowledgment signal (320b) according to the defined radio frequency profile (700a),
wherein the defined radio frequency profile (700a) between each handheld device (305) and the base unit (405) includes:
a distinct period of no wireless transmission (710),
a first period of wireless transmission (725) following the distinct period of no wireless transmission (710), the first period of wireless transmission (725) including transmission of the wireless selection signal (320a), where the first period of wireless transmission (725) occurs upon receipt of the user selection at the input selection control (325), without receipt of a signal from the base unit (405) to initiate transmission, and
a second period of wireless transmission (755) following the first period of wireless transmission (725), the second period of wireless transmission (755) including transmission of the wireless acknowledgment signal (320b).

2. The audience response system of claim 1, wherein the first period of wireless transmission (725) includes repeated retransmissions of the wireless selection signal (320a).

3. The audience response system of claim 1, wherein the first period of wireless transmission (725) includes a transmission interval (730) separating each of the repeated retransmissions of the wireless selection signal (320a).

4. The audience response system of claim 1, wherein the second period of wireless transmission (755) is followed by a distinct period of no wireless transmission.

5. The audience response system of claim 1, wherein each of the plurality of handheld devices (305) includes an output display (355).

6. A handheld device (305) configured to communicate with a base unit (405) in an audience response system having a multiplicity of handheld devices (305) that are like in kind and perform a same function, the handheld device (305) comprising:
a transceiver (315);
a user interface (325) configured to receive a user response;
a unique address (335) identifying the handheld device (305);
signal generating logic (345) configured to transmit a wireless selection signal (320a) encoding the user selection and the unique address (335) according to a defined radio frequency profile (700a),
transmission logic (350) configured to instruct the transceiver (315) to repeatedly transmit the wireless selection signal (320a) upon receipt of the user response, without receiving a signal from the base unit (405) to initiate transmission, until a termination event occurs,
where the termination event consists of one of a receipt of an acknowledgment signal (320b) from the base unit (405) and an expiration of a predetermined period of time.

7. The handheld device of claim 6, wherein the transmission logic (350) is further configured to generate a transmission interval (730), and wherein the wireless selection signal (320a) is repeatedly transmitted according to the transmission interval (730).

8. The handheld device of claim 6, further comprising an output display (355).

9. The handheld device of claim 6, wherein the output display (355) is a liquid crystal display.

10. The handheld device of claim 6, wherein the user interface (325) is an alphanumeric keypad.

11. A base unit (405) configured to communicate with a multiplicity of handheld devices (305) in an audience response system, the base unit (405) comprising:
a transceiver (415);
processing logic (425) configured to instruct the transceiver (415) to operate in a non-transmission mode until a response signal (320a) is wirelessly received from one of the multiplicity of handheld devices (305) in the audience response system;
signal decoding logic (430) configured to decode the response signal into address data that identifies one of the multiplicity of handheld devices (305) and response data that identifies a user response,
wherein the processing logic (425) is further configured to:
generate an acknowledgment signal (320b) including acknowledgment data and the address data,
instruct the transceiver (415) to transmit the acknowledgment signal (320b) and
instruct the transceiver (415) to return to a non-transmission mode until a new response signal (320a) is wirelessly received from one of the multiplicity of handheld devices (305) in the audience response system.

12. The base unit of claim 11, further comprising a memory (435) configured to store the response data.

13. The base unit of claim 11, further comprising an interface for a computer (445).

14. The base unit of claim 11, further comprising a display.

15. The base unit of claim 11, wherein the display is a liquid crystal display.

16. The base unit of claim 11, wherein the display is at least one light emitting diode.

## Patentansprüche

1. Benutzerreaktionssystem, umfassend:
Eine Basiseinheit (405),
eine Vielzahl von Handgeräten (305), welche in ihrer Art gleich sind und dieselbe Funktion ausüben, wobei jedes Handgerät (305) beinhaltet:
Einen Sende-Empfänger-Handgerät (315),
eine Eingabe-Auswahl-Steuerung (325),
eine eindeutige Adresse (335), die einem einzelnen Handgerät (305) zugeordnet ist, und
eine Handgerät-Logik (330), welche konfiguriert ist, eine Benutzerwahl von der Eingabe-Auswahl-Steuerung (325) zu empfangen und das Sende-Empfänger-Handgerät (315) anzuweisen, wiederholt ein drahtloses Auswahlsignal (320a), welches die eindeutige Adresse (335) und die Benutzerwahl verschlüsselt, gemäß einem definierten Funkfrequenzprofil (700a), zwischen jedem Handgerät (305) und der Basiseinheit (405) zu übertragen;
wobei die Basiseinheit (405) beinhaltet:
Einen Basiseinheit-Sende-Empfänger (415), welcher konfiguriert ist, das drahtlose Auswahlsignal (320a) zu empfangen, und
eine Basiseinheit Logik (425), welche konfiguriert ist, das drahtlose Auswahlsignal (320a) nach Empfang durch den Basiseinheit-Sende-Empfänger (415) in die eindeutige Adresse (335) und die Benutzerwahl zu entschlüsseln, ein drahtloses Bestätigungssignal (320b) einschließlich einer Darstellung der eindeutigen Adresse (335) zu erzeugen und den Basiseinheit-Sende-Empfänger (415) anzuweisen, das drahtlose Bestätigungssignal (320b) gemäß dem
definierten Funkfrequenzprofil (700a) zu übertragen;
wobei das definierte Funkfrequenzprofil (700a) zwischen jedem Handgerät (305) und der Basiseinheit (405) beinhaltet:
Eine bestimmte Periode ohne drahtlose Übertragung (710),
eine erste Periode drahtloser Übertragung (725), die der bestimmten Periode ohne drahtlose Übertragung (710) folgt, wobei die erste Periode drahtloser Übertragung (725) die Übertragung des drahtlosen Auswahlsignals (320a) beinhaltet und die erste Periode drahtloser Übertragung (725) nach Empfang der Benutzerwahl an der Eingabe-Auswahl-Steuerung (325) erfolgt, ohne Empfang eines Signals der Basiseinheit (405) zum Initiieren der Übertragung, und
eine zweite Periode drahtloser Übertragung (755), die der ersten Periode drahtloser Übertragung (725) folgt, wobei die zweite Periode drahtloser Übertragung (755) die Übertragung des drahtlosen Bestätigungssignals (320b) beinhaltet.

2. Benutzerreaktionssystem nach Anspruch 1, wobei die erste Periode drahtloser Übertragung (725) wiederholte erneute Übertragungen des drahtlosen Auswahlsignals (320 a) beinhaltet.

3. Benutzerreaktionssystem nach Anspruch 1, wobei die erste Periode drahtloser Übertragung (725) einen Übertragungsintervall (730) beinhaltet, welcher jede der wiederholten erneuten Übertragungen des drahtlosen Auswahlsignals (320a) trennt.

4. Benutzerreaktionssystem nach Anspruch 1, wobei sich nach der zweiten Periode drahtloser Übertragung (755) eine bestimmte Periode ohne drahtlose Übertragung anschließt.

5. Benutzerreaktionssystem nach Anspruch 1, wobei jedes der Vielzahl von Handgeräten (305) ein Ausgabedisplay (355) beinhaltet.

6. Handgerät (305), welches konfiguriert ist, mit einer Basiseinheit (405) in einem Publikumsreaktionssystem, das eine Vielzahl von Handgeräten (305), die in ihrer Art gleich sind und dieselbe Funktion ausüben, aufweist, zu kommunizieren, wobei das Handgerät (305) umfasst:
Einen Sende-Empfänger (315);
eine Benutzerschnittstelle (335), die zum Empfangen einer Benutzerreaktion konfiguriert ist;
eine eindeutige Adresse, die das Handgerät (305) identifiziert;
eine Signalerzeugungs-Logik (345), die konfiguriert ist, ein drahtloses Auswahlsignal (320a), welches die Benutzerwahl und
die eindeutige Adresse (335) verschlüsselt, gemäß eines definierten Funkfrequenzprofils (700a) zu übertragen;
eine Übertragungs-Logik (350), die konfiguriert ist, den Sende-Empfänger (315) bei Empfang der Benutzerreaktion anzuweisen, das drahtlose Auswahlsignal (320a) wiederholt zu übertragen, ohne ein Signal von der Basiseinheit (405) zum Initiieren der Übertragung zu empfangen, bis ein Beendigungsereignis erfolgt,
wobei das Beendigungsereignis aus einem Empfang eines Betätigungssignals (320b) von der Basiseinheit (405) oder einem Ablauf einer vorbestimmten Zeitspanne besteht.

7. Handgerät nach Anspruch 6, wobei die Übertragungs-Logik (350) ferner konfiguriert ist, einen Übertragungsintervall (730) zu erzeugen und wobei das drahtlose Auswahlsignal (320a) gemäß des Übertragungsintervalls (730) wiederholt übertragen wird.

8. Handgerät nach Anspruch 6, welches ferner ein Ausgabedisplay (355) umfasst.

9. Handgerät nach Anspruch 6, wobei das Ausgabedisplay (355) ein Flüssigkristalldisplay ist.

10. Handgerät nach Anspruch 6, wobei die Benutzerschnittstelle (325) eine alphanumerische Tastatur ist.

11. Basiseinheit (405), welche konfiguriert ist, mit einer Vielzahl von Handgeräten (305) in einem Publikumsreaktionssystem zu kommunizieren, wobei die Basiseinheit (405) umfasst:
einen Sende-Empfänger (415);
eine Verarbeitungs-Logik (425), die konfiguriert ist, den Sende-Empfänger (415) anzuweisen, in einem Nicht-Übertragungsmodus zu arbeiten bis ein Reaktionssignal (320a) drahtlos von einem der Vielzahl von Handgeräten (305) des Publikumsreaktionssystems empfangen wird;
eine Signalentschlüsselungs-Logik (430), welche konfiguriert ist, das Antwortsignal in Adressdaten, die eines der Vielzahl von Handgeräten (305) identifizieren und Reaktionsdaten, die eine Benutzerreaktion identifizieren, zu entschlüsseln;
wobei die Verarbeitungs-Logik (425) ferner konfiguriert ist, ein Bestätigungssignal (320b), einschließlich Bestätigungsdaten und der Adressdaten, zu erzeugen,
den Sende-Empfänger (415) anzuweisen, das Bestätigungssignal (320b) zu übertragen, und
den Sende-Empfänger (415) anzuweisen, in einen Nicht-Übertragungsmodus zurückzukehren bis ein neues Reaktionssignal (320a) von einem der Vielzahl von Handgeräten (305) des Publikumsreaktionssystem drahtlos empfangen wird.

12. Basiseinheit nach Anspruch 11, welche ferner einen Speicher (435) umfasst, der konfiguriert ist, die Reaktionsdaten zu speichern.

13. Basiseinheit nach Anspruch 11, welche ferner eine Schnittstelle für einen Computer (445) umfasst.

14. Basiseinheit nach Anspruch 11, welche ferner ein Display umfasst.

15. Basiseinheit nach Anspruch 11, wobei das Display ein Flüssigkristalldisplay ist.

16. Basiseinheit nach Anspruch 11, wobei das Display mindestens eine Leuchtdiode ist.

## Revendications

1. Système de réponse d'audience comprenant :
une unité de base (405),
une pluralité de dispositifs portatifs (305) qui sont équivalents et réalisent une même fonction, chaque dispositif portatif (305) incluant :
un émetteur-récepteur de dispositif portatif (315),
une commande de sélection d'entrée (325),
une adresse unique (335) associée à un seul dispositif portatif (305), et
une logique de dispositif portatif (330) configurée pour recevoir une sélection d'utilisateur provenant de la commande de sélection d'entrée (325) et ordonner à l'émetteur-récepteur de dispositif portatif (315) d'émettre un signal de sélection sans fil (320a) codant l'adresse unique (335) et la sélection d'utilisateur en fonction d'un profil de radiofréquence (700a) défini entre chaque dispositif portatif (305) et l'unité de base (405) ;
dans lequel l'unité de base (405) inclut :
un émetteur-récepteur d'unité de base (415) configuré pour recevoir le signal de sélection sans fil (320a), et
une logique d'unité de base (425) configurée pour décoder le signal de sélection sans fil (320a) en l'adresse unique et la sélection d'utilisateur après réception par l'émetteur-récepteur de dispositif d'unité de base (415), générer un signal d'accusé de réception sans fil (320b) incluant une représentation de l'adresse unique (335), et ordonner à l'émetteur-récepteur d'unité de base (415) d'émettre le signal d'accusé de réception sans fil (320b) en fonction du profil de radiofréquence (700a) défini,
dans lequel le profil de radiofréquence (700a) défini entre chaque dispositif portatif (305) et l'unité de base (405) inclut :
une période distincte de non-émission sans fil (710),
une première période d'émission sans fil (725) suivant la période distincte de non-émission sans fil (710), la première période d'émission sans fil (725) incluant l'émission du signal de sélection sans fil (320a), où la première période d'émission sans fil (725) se produit lors de la réception de la sélection d'utilisateur à la commande de sélection d'entrée (325), sans réception d'un signal provenant de l'unité de base (405) pour déclencher l'émission, et
une seconde période d'émission sans fil (755) suivant la première période d'émission sans fil (725), la seconde période d'émission sans fil (755) incluant l'émission du signal d'accusé de réception sans fil (320b).

2. Système de réponse d'audience selon la revendication 1, dans lequel la première période d'émission sans fil (725) inclut des réémissions répétées du signal de sélection sans fil (320a).

3. Système de réponse d'audience selon la revendication 1, dans lequel la première période d'émission sans fil (725) inclut un intervalle d'émission (730) séparant chacune des réémissions répétées du signal de sélection sans fil (320a).

4. Système de réponse d'audience selon la revendication 1, dans lequel la seconde période d'émission sans fil (755) est suivie d'une période distincte de non-émission sans fil.

5. Système de réponse d'audience selon la revendication 1, dans lequel chacun de la pluralité de dispositifs portatifs (305) inclut un dispositif d'affichage de sortie (355).

6. Dispositif portatif (305) configuré pour communiquer avec une unité de base (405) dans un système de réponse d'audience présentant une multiplicité de dispositifs portatifs (305) qui sont équivalents et réalisent une même fonction, le dispositif portatif (305) comprenant :
un émetteur-récepteur (315) ;
une interface utilisateur (325) configurée pour recevoir une réponse d'utilisateur ;
une adresse unique (335) identifiant le dispositif portatif (305) ;
une logique de génération de signal (345) configurée pour émettre un signal de sélection sans fil (320a) codant la sélection d'utilisateur et l'adresse unique (335) ; et selon un profil de radiofréquence (700a) défini,
une logique d'émission (350) configurée pour ordonner à l'émetteur-récepteur (315) d'émettre de manière répétée le signal de sélection sans fil (320a) lors de la réception de la réponse d'utilisateur, sans la réception d'un signal provenant de l'unité de base (405) pour déclencher l'émission, jusqu'à ce qu'un évènement de fin se produise,
où l'évènement de fin consiste en l'une d'une réception d'un signal d'accusé de réception (320b) provenant de l'unité de base (405) et d'une expiration d'une période de temps prédéterminée.

7. Dispositif portatif selon la revendication 6, dans lequel la logique d'émission (350) est configurée en outre pour générer un intervalle d'émission (730), et dans lequel le signal de sélection sans fil (320a) est émis de manière répétée en fonction de l'intervalle d'émission (730).

8. Dispositif portatif selon la revendication 6, comprenant en outre un dispositif d'affichage de sortie (355).

9. Dispositif portatif selon la revendication 6, dans lequel le dispositif d'affichage de sortie (355) est un dispositif d'affichage à cristaux liquides.

10. Dispositif portatif selon la revendication 6, dans lequel l'interface utilisateur (325) est un clavier alphanumérique.

11. Unité de base (405) configurée pour communiquer avec une multiplicité de dispositifs portatifs (305) dans un système de réponse d'audience, l'unité de base (405) comprenant :
un émetteur-récepteur (415) ;
une logique de traitement (425) configurée pour ordonner à l'émetteur-récepteur (415) de fonctionner dans un mode de non-émission jusqu'à ce qu'un signal de réponse (320a) soit reçu de manière sans fil en provenance de l'un de la multiplicité de dispositifs portatifs (305) dans le système de réponse d'audience ;
une logique de décodage de signal (430) configurée pour décoder le signal de réponse en données d'adresse qui identifie l'un de la multiplicité de dispositifs portatifs (305) et en données de réponse qui identifient une réponse d'utilisateur,
dans laquelle la logique de traitement (425) est configurée en outre pour :
générer un signal d'accusé de réception (320b) incluant des données d'accusé de réception et les données d'adresse,
ordonner à l'émetteur-récepteur (415) d'émettre le signal d'accusé de réception (320b), et
ordonner à l'émetteur-récepteur (415) de revenir à un mode de non-émission jusqu'à ce qu'un nouveau signal de réponse (320a) soit reçu de manière sans fil en provenance de l'un de la multiplicité de dispositifs portatifs (305) dans le système de réponse d'audience.

12. Unité de base selon la revendication 11, comprenant en outre une mémoire (435) configurée pour stocker les données de réponse.

13. Unité de base selon la revendication 11, comprenant en outre une interface pour un ordinateur (445).

14. Unité de base selon la revendication 11, comprenant en outre un dispositif d'affichage.

15. Unité de base selon la revendication 11, dans laquelle le dispositif d'affichage est un dispositif d'affichage à cristaux liquides.

16. Unité de base selon la revendication 11, dans laquelle le dispositif d'affichage est au moins une diode électroluminescente.
